# EUROPEAN PATENT APPLICATION

(11) **EP 1 411 076 A1**
(43) Date of publication of application: **21.04.2004**
(21) Application number: 03255808.2
(22) Date of filing: 17.09.2003
(51) Int. Cl.: C08J 3/24, C08F 2/06, B01J 8/06

(54) **Continuous production of crosslinked polymer nanoparticles**

(30) Priority: 15.10.2002 US 418484 P
(71) Applicant: ROHM AND HAAS COMPANY, Philadelphia, Pennsylvania 19106-2399 (US)
(72) Inventor: Blankenship, Robert Mitchell, Harleysville, Pennsylvania 19438 (US); Devonport, Wayne, Doylestown, Pennsylvania 18901 (US); Lundquist, Eric Gustave, North Wales, Pennsylvania 19454 (US)
(74) Representative: Kent, Venetia Katherine

(57) **Abstract**

The present invention relates to a continuous process for producing polymeric nanoparticles of 1 to 100 nm in diameter comprising continuously feeding a reaction mixture comprising at least one type of monomer into a reactor under reaction conditions capable of causing polymerization of said monomer to produce said polymeric nanoparticles.

## Description

### Background of the Invention

Polymer nano-particles have attracted increased attention over the past several years in a variety of fields including catalysis, coatings, medicine, electronics and polymeric composites. Processes developed to produce polymer nanoparticles include emulsion polymerization, solution polymerization, and dispersion polymerization. The key to producing polymer nanoparticles is keeping the monomers and final product well dispersed within the polymerization medium. In emulsion polymerizations, this is accomplished by using dilute conditions and/or high levels of dispersing agents (i.e. surfactants). In solution polymerizations this is accomplished by using dilute conditions, i.e high solvent to monomer ratios.

Polymer nanoparticles are typically prepared in batch processes. Batch processes require several hours, in some cases greater than eight hours, to feed the reactants, including monomer or monomers into the reactor, conduct the polymerization reaction, cool the resulting polymer, remove the polymer, and clean the reactor. The equipment required for batch processes typically includes reactors which can hold up to 75,000 liters and may cost more than $1,000,000 per reactor. Specifically, US 5863996(Graham) discloses a batch process that involves the addition of an initiator solution to a dilute monomer mixture in a reactor containing solvent. Key to the production of polymer nanoparticles is that the polymerization takes place under dilute conditions with the final concentration of polymerized polymer particles being typically less than 25%. A batch process run under these conditions is inefficient use of expensive reactors, and thus a costly process.

To remedy the deficiencies of the batch processes, it would be useful to develop continuous polymerization processes to produce polymeric nanoparticles. Continuous polymerization processes are potentially more efficient than a batch process. In a continuous process, monomer and other reactants are continuously fed into and through the reactor while, at the same time, polymer is continuously removed from the reactor. A continuous process may produce more product per day, utilizing smaller, less expensive reactors. Continuous processes utilizing continuous stirred tank reactors or tubular reactors are two types of continuous processes.

However, continuous polymerization processes have not been applied to crosslinked polymeric nanoparticle production. See US 4,713,434 which discloses continuous emulsion polymerization reactions for preparing non crosslinked polymers of particle size of 60 to 110 nm. Further, US 6,252,016 discloses a continuous process for preparing non crosslinked polymers of particle size greater than 80 nm by using a reactor that contains non-cylindrical channels and by carefully controlling the surface temperature of the non-cylindrical channels.

Applicants have solved the problems inherent in the batch polymerization production of crosslinked polymeric nanoparticles by the use of a continuous process heretofore unrecognized by the art.

### Summary of the Invention

The present invention relates to a continuous process for producing crosslinked polymeric nanoparticles of 1 to 100 nm in diameter comprising continuously feeding a reaction mixture comprising at least one type of monomer into a reactor under reaction conditions capable of causing polymerization of said monomer to produce said crosslinked polymeric nanoparticles.

The following terms have the following meanings herein: The term "continuous" as used here in means running a process without stopping or running a process for periods of time with intermittent stops.

### Detailed Description of the Invention

The present invention relates to a continuous process for producing crosslinked polymeric nanoparticles of 1 to 100 nm in diameter comprising continuously feeding a reaction mixture comprising at least one type of monomer into a reactor under reaction conditions capable of causing polymerization of said monomer to produce said crosslinked polymeric nanoparticles.

The continuous process to produce crosslinked nanoparticles of the present invention can be applied to polymerization techniques known to those skilled in the art. These techniques include, but are not limited to, condensation polymerization, cationic polymerization, ring opening polymerization, anionic polymerization, living free radical (i.e. atom transfer radical, nitroxide mediated) and free radical addition polymerization. The most preferred technique is the free radical addition polymerization of a radical polymerizable monomer and at least one crosslinking monomer.

Radical Polymerizable monomers useful in the practice of the present invention include, but are not limited to, alkyl (meth)acrylates, alicyclic (meth)acrylates, (meth)acrylamides, vinyl acetates, alkenyl (meth)acrylates, aryl (meth)acrylates, alkylaryl (meth)acrylates, fluro alkyl (meth)acrylates, vinyl aromatic monomers, nitrogen containing (meth)acrylates, vinyl acetate, (meth)acrylic acid, and substituted ethylene monomers.

Preferred alkyl (meth)acrylates useful in the practice of the present invention include, for example, substituted and unsubstituted methyl methacrylate ("MMA"), methyl acrylate, ethyl acrylate, propyl methacrylate, butyl methacrylate ("BMA"), butyl acrylate ("BA"), isobutyl methacrylate ("IBMA"), isobornyl methacrylate ("IBOMA'), Itaconic acid ("IA"), glycidal methacrylate ("GMA"), hexyl methacrylate, cyclohexyl methacrylate, cyclohexyl acrylate, 2-ethylhexyl acrylate ("EHA"), 2-ethylhexyl methacrylate, octyl methacrylate, decyl methacrylate, isodecyl methacrylate, undecyl methacrylate, dodecyl methacrylate, tridecyl methacrylate, tetradecyl methacrylate, pentadecyl methacrylate, hexadecyl methacrylate, heptadecyl methacrylate, octadecyl methacrylate, nonadecyl methacrylate, cosyl methacrylate, eicosyl methacrylate and mixtures thereof.

Useful substituted alkyl (meth)acrylate monomers containing acid functional monomers may include those with one or more hydroxyl groups in the alkyl radical, such as hydroxyalkyl (meth)acrylate monomers having a substituted alkyl group selected from the group consisting of (C₂-C₆)alkyl, branched and unbranched alkyl groups. Likewise, where hydroxyl group containing monomers or monomers containing acetoacetoxy groups are used to make PNPs, acid functional monomers can be added to react with those groups. Examples of these monomers are hydroxyalkyl (meth)acrylate 2-hydroxyethyl methacrylate ("HEMA"), 2-hydroxyethyl acrylate ("HEA"), 2-hydroxypropyl methacrylate and acetoacetoxy methacrylate.

Other substituted (meth)acrylate monomers useful in the present invention may include silicon-containing monomers such as γ-propyl tri(C₁-C₆) alkoxysilyl (meth)acrylate, γ-propyl tri(C₁-C₆) alkylsilyl (meth)acrylate, γ-propyl di(C₁-C₆) alkoxy (C₁-C₆)alkylsilyl (meth)acrylate, γ-propyl di(C₁-C₆)alkyl(C₁-C₆)alkoxysilyl (meth)acrylate, vinyl tri(C₁-C₆)alkoxysilyl (meth)acrylate, vinyl di(C₁-C₆)alkoxy(C₁-C₆)alkylsilyl (meth)acrylate, vinyl (C₁-C₆) alkoxydi (C₁-C₆)alkylsilyl (meth)acrylate, vinyl tri(C₁-C₆)alkylsilyl (meth)acrylate, and mixtures thereof.

Vinylaromatic monomers useful as polymerizable monomers in the practice of the present invention include styrene ("STY"), α-methylstyrene, vinyltoluene, *p*-methylstyrene, ethylvinylbenzene, vinylnaphthalene, vinyl pyridines, vinylxylenes, chlorostyrenes, bromostyrenes, fluorostyrenes, and mixtures thereof.

Other polymerizable monomers useful in the practice of the present invention include cyclopent(adi)ene, allylic monomers, vinyl acetate, vinyl formamide, vinyl chloride, vinyl fluoride, vinyl bromide, vinylidene chloride, vinylidene fluoride and vinylidene bromide. However, it is preferable to use those monomers which can be polymerized using initiators commonly used to polymerize (meth)acrylate monomers, e.g. dibenzoyl peroxide.

Preferred Polymerizable Monomers include, but are not limited to, BA, BMA,IBOMA,MMA,MA, MAA, AA,IA, Styrene, LMA,GMA, and HEMA.

Suitable crosslinking monomers useful in the practice of the present invention include, but are not limited to, di-, tri-, tetra-, or higher multi-functional ethylenically unsaturated monomers such as ethyleneglycol diacrylate (EGDA), trimethylolpropane triacrylate (TMPTA), trimethylolpropane trimethacrylate (TMPTMA), allyl methacrylate (ALMA), ethyleneglycol dimethacrylate (EGDMA), diethylene glycol dimethacrylate (DEGDMA), propyleneglycol dimethacrylate, propyleneglycol diacrylate, 2,2-dimethylpropane-1,3- diacrylate, 1,3-butylene glycol diacrylate, 1,3-butylene glycol dimethacrylate, 1,4-butanediol diacrylate, diethylene glycol diacrylate, diethylene glycol dimethacrylate, 1,6-hexanediol diacrylate, 1,6-hexanediol dimethacrylate, tripropylene glycol diacrylate, triethylene glycol dimethacrylate, tetraethylene glycol diacrylate, polyethylene glycol 200 diacrylate, tetraethylene glycol dimethacrylate, polyethylene glycol dimethacrylate, ethoxylated bisphenol A diacrylate, ethoxylated bisphenol A dimethacrylate, polyethylene glycol 600 dimethacrylate, poly(butanediol) diacrylate, pentaerythritol triacrylate, trimethylolpropane triethoxy triacrylate, glyceryl propoxy triacrylate, pentaerythritol tetraacrylate (PETTA), pentaerythritol tetramethacrylate (PETMA), and mixtures thereof. Other crosslinkers useful in the present invention may include DVB, vinyl urethanes, diallyl ethers, diallyl esters, vinyl polyesters, trivinylbenzene, divinyltoluene, diallyloxyacetic acid, divinylpyridine, divinylnaphthalene and divinylxylene, diethyleneglycol divinyl ether, bisacrylamide, triallyl cyanurate and trivinylcyclohexane. For use in high-temperature resistant applications with silicon-containing resins, crosslinkers include, but are not limited to, silyl group-containing monomers such as divinyl silane, trivinyl silane, dimethyl divinyl silane, divinyl methyl silane, methyl trivinyl silane, diphenyl divinyl silane, divinyl phenyl silane, trivinyl phenyl silane, divinyl methyl phenyl silane, tetravinyl silane, siloxane-containing monomers such as dimethyl vinyl disiloxane, poly(methyl vinyl siloxane), poly(vinyl hydro siloxane), poly (phenyl vinyl siloxane) and mixtures thereof.

Preferred Crosslinkers include, but are not limited to, DVB, TMPTA, TMPTMA, EGDMA, ALMA, bisacrylamide, and DEGDMA.

Initiators useful in the free radical polymerization of the present invention include, for example, one or more of: peroxyesters, dialkylperoxides, alkylhydroperoxides, persulfates, azoinitiators, redox initiators and the like. Useful free radical initiators include, but are not limited to: benzoyl peroxide, t-butyl peroctoate, t-amyl peroxypivalate, cumene hydroperoxide, and azo compounds such as azoisobutyronitrile and 2, 2'-azo*bis* (2-methylbutanenitrile). Preferably, the free radical initiator is t-amyl Peroxypivalate. The amount of the free radical initiator used is typically from 0.05 to 10% by weight, based on the weight of total monomer.

Control of particle size and distribution can be augmented by such methods as choice of solvent, choice of initiator, total solids level, initiator level, type and amount of multi-functional monomer, type and amount of chain transfer agent, and reaction conditions. Chain transfer reagents can optionally be used to prepare the polymers useful in the present invention. Suitable chain transfer agents include, for example: mercaptopropionic acid, alkyl mercaptans such as dodecyl mercaptan, and aromatic hydrocarbons with activated hydrogens such as toluene.

Solvents or polymerization medium useful in the practice of the present invention include, but are not limited to, hydrocarbons, such as alkanes, fluorinated hydrocarbons, aromatic hydrocarbons, ethers, ketones, esters, alcohols, water and mixtures thereof. Particularly suitable solvents include mesitylene, xylenes, diphenyl ether, gamma butyrolactone, ethyl acetate, ethyl lactate, propyleneglycol , monomethylether acetate, caprolactone, 2-heptanone, methylisobutylketone, diisobutylketone, methylethylketone, isobutyl acetate, propyleneglycol monomethylether, and alkyl alcohols such as hexanol, t-butanol, and isopropanol. Other solvent or polymerization medium useful in the practice of the present invention include super critical solvents such as compressed carbon dioxide. Super critical carbon dioxide and low boiling solvents such as dimethyl ether and 1,1,1,2 tetrafluoroethane are also useful media as they can be readily evaporated and the product isolated as a dry powder.

One skilled in the art knows that polymerization reactions may also be run in the presence of surfactants, chain transfer agents, linear polymers, pigments, dyes and pH adjusters. Where emulsion polymerization is desired, surfactant may be combined with the monomer, the initiator, and water. By surfactant is meant a compound which reduces surface tension when dissolved in water or water solutions, or which reduces interfacial tension between two liquids, or between a liquid and a solid. Included in surfactants are detergents, wetting agents, and emulsifiers. Suitable surfactants include, but are not limited to anionic and nonionic emulsifiers such as alkali and ammonium alkyl sulfates, for example sodium lauryl sulfate, alkyl sulfonic acids, fatty acids, and oxyethylated alkyl phenols. The amount of surfactant used is typically 1 to 6% by weight, based on the weight of total monomer. The amount of water used is typically from 5 to 90% by weight, based on the weight of total monomer. The surfactant and water may also may be used in downstream dilutions of polymer emulsions made from the monomer emulsions.

Suitable reactors for use in the practice of the present invention include, but are not limited to : stirred tank reactors, tubular reactors, loop reactors, non cylindrical reactors and spinning tube reactors and combinations thereof. Most preferred reactors include stirred tank reactors, tubular and noncylindrical reactors.

A continuous stirred tank reactor is a single stirred tank type reactor in which monomers and other reactants are continuously fed into the reactor while polymer is continuously removed from the reactor. The continuous tank reactor used in this continuous process is similar to the reactors used in a batch process except that because the process is continuous, the capacity of the reactor can be better utilized. A continuous stirred tank reactor train process is made up of two or more stirred tank reactors connected in series. Monomer and other reactants can be continuously fed into the first reactor and partially reacted. The contents of the first reactor are continuously fed to a second reactor where they may be further reacted. Additional monomer and reactants may be continuously fed to the second reactor. The contents of the second reactor may be continuously fed to a third reactor and so on. Continuous stirred tank reactors have an advantage over the batch process of utilizing less costly equipment because of the ability to use reactors with less capacity, yet still obtain the same output in the same or shorter reaction times.

Tubular reactors are also useful in the practice of the present invention. Suitable tubular reactors include tubular reactors having no moving parts and of any cross-sectional shape that permit continuous, steady state flow and that may operate under elevated temperatures and pressures. Such reactors are typically made from inert materials, such as stainless steel or titanium. The reactor may be of any length and cross-sectional dimension that permits effective temperature and pressure control. Tubular reactors consist of a cylindrical channel immersed in a temperature control medium. Reactants are fed in one end of the tubular reactor and polymerized inside the tubular reactor, and polymer is removed from the other end of the tubular reactor. In order to facilitate good heat exchange between the temperature control medium and the reactant, the cylindrical channel must be narrow, typically from 1 to 15 cm in diameter.

The tubular channels can be immersed in the temperature control medium by methods known in the art such as simply exposing to air, placing them in a forced air oven or placing them in a bath containing liquid or solid temperature control medium.

However, it is preferable that the temperature control medium flows through separate, alternating channels to the channels in which the reaction mixture containing at least one monomer flows. By alternating, it is meant that the channel next to a cylindrical channel in which the reaction mixture containing at least one monomer flows, contains temperature control medium. The cylindrical channels may share a common wall, or the non-cylindrical channels may have separate walls so long as the cylindrical channels are close enough together to provide sufficient temperature control to polymerize the monomer. It is further preferable that the flow of the temperature control medium be opposite to the flow of the reaction mixture containing at least one monomer to accomplish maximum heat transfer.

One skilled in the art of polymer chemistry understands that suitable reaction conditions for practice of the present invention will vary from facility to facility. Nonetheless, the following nonlimiting examples are presented.

### Example 1 Tubular Reactor

A 10 foot long section of stainless steel tubing having an inner diameter of 1/16th inch and a wall thickness of 0.050 inch is connected at one end to a high pressure pump (Hewlett Packard Model HP 1050 TI) and at another end to a back-pressure control device. Between the two ends, the section of tubing is coiled about a torus-shaped metal mandrel. The mandrel is situated above a primary coil of a transformer so that the coils of tubing and the mandrel functioned as secondary coils of the transformer. The coils of tubing are further equipped with one end of a temperature probe. The other end of the temperature probe is connected to a temperature controlling device. The temperature controlling device regulated the current supplied to the primary coil of the transformer which has the effect of regulating the heat of inductance imparted to the coiled steel tubing.

A reaction mixture is prepared by mixing solvent, monomers, comonomers and initiator. Nitrogen is bubbled through the mixture while stirring. The reaction mixture is pumped through the tubing via the high pressure pump at a rate based on the conversion desired. Current was supplied to the primary coil of the transformer to increase the temperature within the tubing to the desired polymerization temperature. At first solvent is pumped through the tubing. It is then replaced by the reaction mixture which is continuously pumped through the tubing at the same rate, temperature and pressure. After allowing a suitable amount of time for the solvent to be cleared from the tubing, product is collected as the effluent from the back-pressure control device. Solvent and residual monomer are removed on a rotary evaporator.

60g methyl methacrylate, 20g acrylic acid, 10g TMPTA, 600 g methyl ethyl ketone (MEK), and 3 g Triganox 125-C75 is premixed and pumped through a continuous stainless steel tube reactor described above. The reaction temperature is 100C and the pressure is under 100 psi. The flow rate is adjusted to have a resident time of 90 minutes. The diluted crude polymer is then passed through a heat exchanger for cooling and collected in a glass vessel. The overall conversion is about 90%. The crude polymer solution is then sent to a rotary evaporator where the volatiles are removed under vacuum.

### Example 2 Continuous Stirred Reactor

To a 500 ml stirred reaction flask containing 100 grams of methyl isobutyl ketone (MIBK) at 80C is continuously added a mixture containing 400 g of MIBK, 20 grams of TMPTA, 80 grams of MMA, and 4 grams of tert-amyl Peroxypivalate initiator. The stirred reaction mixture is continuously removed from the reaction vessel at a rate so that a steady state conversion of 50% is established. The stirred reaction mixture that is removed passes into another 500 ml stirred reaction flask containing 100g of MIBK at 80C where the total steady state conversion reaches 75% before it is fed into another 500 ml stirred reaction flask containing 100g of MIBK at 80C where the total steady state conversion is greater than 90%. This mixture is then fed into a distillation device in which residual MMA and 200 g of MIBK are removed to give a dispersion of 20% crosslinked polymer nanoparticles in MIBK.

## Claims

1. A continuous process for producing crosslinked polymeric nanoparticles of 1 to 100 nm in diameter comprising continuously feeding a reaction mixture comprising at least one type of monomer into a reactor under reaction conditions capable of causing polymerization of said monomer to produce said crosslinked polymeric nanoparticles.

2. A composition comprising crosslinked polymeric nanoparticles produced by the process of Claim 1.

3. A composition according to Claim 2 produced in a reactor selected from the group consisting of a stirred tank reactor, a tubular reactor, a loop reactor, a non-cylindrical reactor, a spinning tube reactor and combinations thereof.
